# FASCICULE DE BREVET EUROPEEN

(11) **EP 1 104 742 B1**
(45) Date de publication et mention de la délivrance du brevet: **23.07.2003**
(21) Numéro de dépôt: 99204094.9
(22) Date de dépôt: 02.12.1999
(51) Int. Cl.: B64D 37/32

(54) **Réservoir sur un circuit de liquide**
Behalter fur einen Flüssigkeitkreislauf
Tank for liquid supply

(43) Date de publication de la demande: 06.06.2001
(73) Titulaire: Techspace aero, 4041 Milmort - Herstal (BE)
(72) Inventeur: Menu, Philippe René Oswald, 4350 Remicourt, Pousset (BE); Hemmer, Alain Pascal Jacques, 1030 Bruxelles (BE); Cornet, Albert René Maurice Joseph, 4800 Verviers (BE)
(74) Mandataire: Berrou, Paul

(56) Documents cités:
- EP-A- 0 781 677
- GB-A- 580 006
- US-A- 2 860 648
- US-A- 2 975 793

## Description

L'invention a trait à un réservoir placé sur un circuit de liquide, et plus précisément à un aménagement du réservoir dont le but est de garantir une alimentation correcte du circuit en toutes circonstances, même quand le réservoir est renversé.

Les réservoirs placés sur les circuits de liquide sont des capacités qui recueillent le liquide en excédent avant de le refaire circuler. Ils communiquent avec le circuit par un conduit d'entrée qui y rejette le liquide provenant du reste du circuit et par un conduit de sortie par lequel du liquide pour le circuit est aspiré par des pompes. Comme les réservoirs de ce genre ne sont que partiellement pleins, le conduit de sortie débouche au fond du réservoir. Mais quand le réservoir est renversé, ce qui est le cas dans des aéronefs en vol sur le dos, ou plus généralement en condition d'inversion de gravité, le liquide reflue de l'autre côté du réservoir et laisse le conduit de sortie à sec, ce qui interrompt temporairement l'alimentation du circuit.

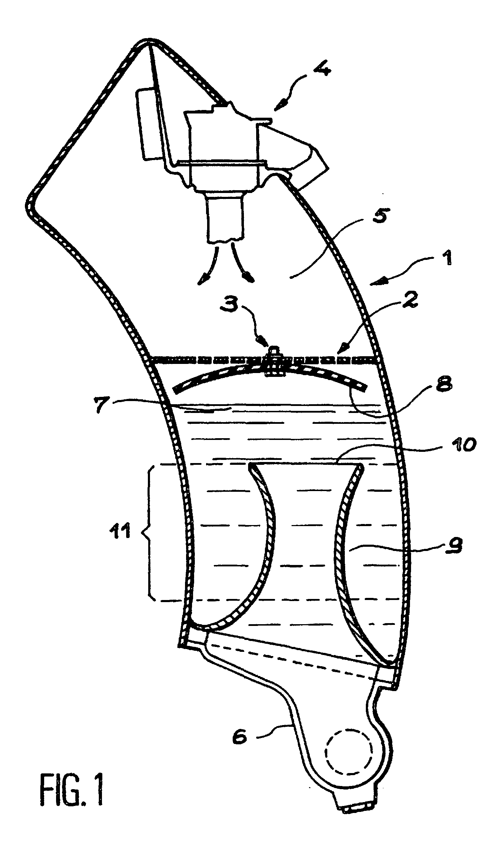

Un perfectionnement pour obvier à cet inconvénient est décrit dans le brevet français 2 621 662 d'où est tirée la figure 1. Le réservoir 1 est divisé en deux compartiments par une cloison 2 horizontale et percée. Le conduit d'entrée 4 débouche dans le compartiment supérieur 5 et le conduit de sortie 6 est au fond du compartiment inférieur 7. Un clapet 8 est installé sous la cloison 2 et consiste en une membrane flexible et rivetée en son centre par un élément 3 à la cloison 2 : le liquide originaire du conduit d'entrée 4 s'accumule sur la cloison 2, traverse ses perçages et courbe le clapet 8 en ombrelle avant de couler dans le compartiment inférieur 7. Quand le réservoir 1 est renversé, le liquide emplissant le compartiment inférieur 7 vient peser sur le clapet 8, qui se referme et empêche donc le liquide de revenir au compartiment supérieur 5. Le conduit de sortie 6 est prolongé par une trompe 9 qui s'étend dans le compartiment inférieur 7 et permet donc d'aspirer du liquide tant que son niveau s'étend au-dessus du bord 10 de la trompe 9 ; il s'agit sensiblement du volume 11 individualisé de la figure. Mais l'alimentation du circuit ne s'interrompt pas moins quand ce volume 11 est épuisé, et il faut en pratique que le réservoir 1 soit plus volumineux que les réservoirs ordinaires pour qu'on puisse loger la trompe 9 et le volume du liquide entourant la trompe 9, qui n'est qu'une réserve restant stagnante et inutilisée dans les circonstances ordinaires de vol.

On trouve encore des conceptions où le réservoir de circuit de liquide comprend encore un conduit de sortie du liquide qui débouche au fond du réservoir, un conduit d'entrée du liquide et une cloison percée d'au moins une ouverture qui divise le réservoir et y délimite un compartiment de fond ; toutefois, la cloison est ici construite de façon à rester ouverte en toutes circonstances, notamment en toute position ou orientation du réservoir, c'est-à-dire qu'elle est dépourvue de clapet ; et le conduit d'entrée du liquide débouche dans le compartiment de fond. Comme le fond vient assez près de la cloison de division, le volume du réservoir est réduit, le compartiment de fond est normalement complètement empli et le liquide en excédent forme une réserve dans le compartiment supérieur ; en condition de renversement du réservoir, le conduit d'entrée continue de fournir du liquide dans le compartiment de fond, ce qui évite de mettre à sec le conduit de sortie, même si cette condition dure longtemps. Des fuites de liquide vers le compartiment de fond sont tolérées, mais une vidange totale du compartiment inférieur est évitée si la cloison est façonnée en bac renversé ou plus généralement que les ouvertures de la cloison sont délimitées par des rebords s'étendant de la cloison vers le fond.

Cette conception est pourtant insuffisante pour garantir que le liquide sortant du réservoir est complètement exempt de bulles de gaz : celles que le conduit d'entrée introduit dans le réservoir s'accumulent sous la cloison en temps normal et traversent le compartiment de fond en s'élevant quand le réservoir est renversé ; elles se dirigent alors vers le conduit de sortie. On doit aussi remarquer que les circuits hydrauliques de commande des moteurs, qui sont une application importante de l'invention, sont généralement bien dégazés, sauf dans des circonstances particulières de purge ou de manoeuvre brutale, mais que les bulles de gaz alors formées peuvent être volumineuses : elles occupent alors une partie importante du compartiment de fond et être aspirées par le conduit de sortie même si la gravité positive est maintenue. Les perçages dont on munit parfois la cloison de séparation pour évacuer peu à peu le gaz s'accumulant dans le compartiment de fond sont alors inopérants, et leur inconvénient de permettre la vidange du compartiment de fond en période de gravité négative persistante demeure. C'est pourquoi cette autre conception ne convient pas en l'état. L'invention proposée ici consiste à la perfectionner en la rendant apte à l'application mentionnée ci-dessus grâce à un dégazage complet du compartiment de fond.

On ajoute un désaérateur à travers la cloison, dont l'orifice de dégazage est situé hors du compartiment de fond, si bien que le contenu du compartiment de fond reste entièrement liquide et qu'une alimentation de bonne qualité du circuit est produite. L'orifice de dégazage pourrait former une fuite supplémentaire en condition de renversement, mais on y obvie en ajoutant un clapet sur cet orifice de dégazage, qui se ferme par gravité dès que la condition d'inversion de gravité est atteinte.

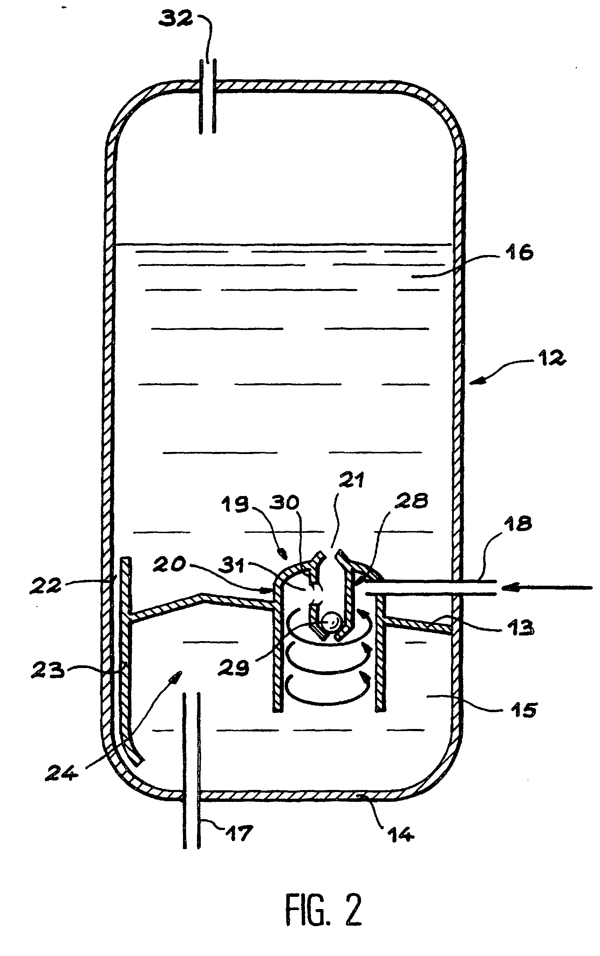

On va maintenant décrire l'invention en détail à l'aide des figures 1 et 2, dont la première, déjà décrite, illustre un réservoir ordinaire, et dont la seconde est un schéma d'un réservoir particulier conforme à l'invention.

Le réservoir de la figure 2 porte la référence générale 12 ; une cloison 13, adjacente à son fond 14, le divise en un compartiment inférieur 15 de fond, plus petit que dans le réservoir 1 précédent, et en un compartiment supérieur 16 ; un conduit de sortie 17 débouche comme de coutume dans le fond 14, mais un conduit d'entrée 18 débouche lui aussi vers le bas du réservoir 12 et finit en un désaérateur 19 qui s'étend à travers la cloison 13. Le désaérateur 19 fonctionne par centrifugation, le conduit d'entrée 18 projetant l'émulsion de gaz et de liquide tangentiellement au sommet d'une cloche 20, ce qui lui impose un mouvement en vrille qui concentre le liquide sur la paroi et refoule le gaz au centre et vers le sommet de la cloche 20, qu'il quitte par un orifice de dégazage 21 au sommet de la cloche 20, alors que le liquide purifié coule vers le fond du compartiment inférieur 15. L'orifice de dégazage 21 est situé dans le compartiment supérieur 16, puisque la cloche 20 traverse la cloison 13 : le liquide et le gaz sont d'autant mieux séparés qu'ils sont rejetés de part et d'autre de la cloison 13. Le désaérateur 19 est en principe complètement immergé, puisque le compartiment supérieur 16 est en partie empli, mais cela ne modifie pas son effet.

La cloison 13 est continue dans le réservoir 12, hormis une ouverture 22 de petite superficie ; cette ouverture est entourée par un rebord 23 qui s'étend de la cloison 13 jusque près du fond 14 et contribue donc à former avec celle-là un bac renversé 24 dans lequel du liquide peut s'accumuler même quand le réservoir 12 est renversé ; le conduit de sortie 17 s'élève plus haut que le bas du rebord 23, si bien qu'il reste plongé dans le liquide emplissant le bas renversé 24, encore alimenté par le conduit d'entrée 18 quand le réservoir 12 est renversé.

Une précaution est prise pour limiter les fuites vers le compartiment supérieur 16 : le désaérateur 19 est muni d'un clapet 28 devant l'orifice de dégazage 21, et qui consiste essentiellement en une bille 29 mobile dans un fourreau 30 vertical en fonction de la gravité ; le fourreau 30 comprend l'orifice de dégazage 21 au sommet et une ouverture 31 à mi-hauteur, de sorte que la bille 29 séjourne au fond du fourreau 30 dans les circonstances normales, quand le réservoir 12 est à l'endroit, et permet donc l'évacuation de gaz à travers le fourreau 30 entre l'orifice 31 et l'orifice de dégazage 21, mais interrompt cette communication et ferme le désaérateur 19 par le haut en se plaçant devant l'orifice de dégazage 21 quand la gravité devient négative.

Des essais ont démontré la bonne tenue du désaérateur 19 au clapet 28 en l'état complètement immergé, et son efficacité même en cas d'arrivée d'une grosse bulle de gaz.

La référence 32 désigne une prise de pression extérieure au sommet du réservoir 12, qui permet d'évacuer le gaz s'accumulant dans le réservoir 12 mais n'intervient toutefois pas directement dans le fonctionnement de l'invention.

Une application importante de l'invention concerne les bâches des circuits hydrauliques prévus sur les aéronefs pour les commandes de vol ou d'autres équipements.

## Revendications

1. Réservoir (12) de circuit de liquide, comprenant un conduit de sortie (17) du liquide débouchant dans un fond (14) du réservoir, un conduit d'entrée (18) du liquide et une cloison (13), percée d'au moins une ouverture (22), divisant le réservoir (12) et y délimitant un compartiment de fond (15), la cloison étant construite de façon à rester ouverte en toute condition du réservoir, et le conduit d'entrée (18) du liquide débouchant dans le compartiment de fond (15), **caractérisé en ce qu'**il comprend un désaérateur (19) à travers la cloison et à orifice de dégazage (21) situé hors du compartiment de fond (15), ainsi qu'un clapet (28) à l'orifice de dégazage du désaérateur, qui se ferme par gravité en condition d'inversion de gravité du réservoir (12).

## Patentansprüche

1. Behälter (12) für einen Flüssigkeitskreislauf mit einer in einem Boden (14) des Behälters mündenden Ausgangsleitung (17) für die Flüssigkeit, einer Eingangsleitung (18) für die Flüssigkeit und einer von wenigstens einer Öffnung (22) durchbrochenen Trennwand (13), die den Behälter (12) unterteilt und in diesem ein Bodenabteil (15) abgrenzt, wobei die Trennwand so konstruiert ist, daß sie in jeder Lage des Behälters offen bleibt, und wobei die Eingangsleitung (18) in dem Bodenabteil (15) mündet, **dadurch gekennzeichnet, daß** der Behälter einen die Trennwand durchdringenden Entlüfter (19) mit einer außerhalb des Bodenabteils (15) liegenden Entgasungsöffnung (21) sowie in der Entgasungsöffnung des Entlüfter ein Ventil (28) aufweist, das sich bei Umkehrung der Schwerkraftwirkung auf den Behälter (12) durch Schwerkraft schließt.

## Claims

1. Tank (12) for a liquid circuit, comprising a liquid outlet tube (17) having an open end in a bottom (14) of the tank, a liquid inlet tube (18) and, interrupted by at least one opening (22), a partition (13) dividing the tank (12) and defining therein a bottom compartment (15), the partition being constructed in such a way as to remain open under all conditions of the tank, and the liquid inlet tube (18) having an open end in the bottom compartment (15), which tank is **characterized in that** it comprises a deaerator (19) through the partition and a degassing orifice (21) situated outside of the bottom compartment (15), and a valve (28) in the degassing orifice of the deaerator, which closes under gravity under conditions of inversion of gravity of the tank (12).
